# EUROPÄISCHE PATENTSCHRIFT

(11) **EP 1 740 857 B1**
(45) Veröffentlichungstag und Bekanntmachung des Hinweises auf die Patenterteilung: **30.09.2015**
(21) Anmeldenummer: 05743139.7
(22) Anmeldetag: 20.04.2005
(51) Int. Cl.: F16J 15/32

(54) **VERFAHREN ZUM HERSTELLEN VON LAMELLEN FÜR EINE LAMELLENDICHTUNG**
METHOD FOR PRODUCING LAMELLAE FOR A LAMELLAR SEAL
PROCEDE DE FABRICATION DE LAMELLES POUR UN JOINT A LAMELLES

(30) Priorität: 26.04.2004 GB 0409247
(43) Veröffentlichungstag der Anmeldung: 10.01.2007
(73) Patentinhaber: ALSTOM Technology Ltd, 5400 Baden (CH)
(72) Erfinder: HOGG, Simon Ian, Rugby Warwickshire CV21 2NH (GB); RHODES, Nigel Anthony, Newbold Verdon Leicestershire LE9 9LY (GB); SCHÖNFELD, Erwin, CH-5405 Baden-Dättwil (CH)
(74) Vertreter: Alstom Technology Ltd
(86) Internationale Anmeldenummer: PCT/EP2005/051735
(87) Internationale Veröffentlichungsnummer: WO 2005/103536

(56) Entgegenhaltungen:
- EP-A- 1 013 975
- EP-A1- 1 489 340
- WO-A-03/072287

## Beschreibung

### TECHNISCHES GEBIET

Die vorliegende Erfindung bezieht sich auf das Gebiet der Dichtungen von rotierenden Maschinen. Sie betrifft ein Verfahren zum Herstellen von Lamellen für eine Lamellendichtung gemäss dem Oberbegriff des Anspruchs 1.

### STAND DER TECHNIK

Eine Gasturbine besteht aus einem Rotor, auf dem verschiedene Stufen mit Verdichterschaufeln und Turbinenschaufeln angebracht werden, sowie einem Statorgehäuse. Der Rotor wird an jedem Ende der Rotorwelle in Lagern montiert. Die Steuerung des Gasstroms innerhalb der Gasturbine ist von überragender Bedeutung im Hinblick sowohl auf die Funktionalität als auch die Effektivität. An verschiedenen Stellen entlang der Rotorwelle werden Dichtungs-Technologien verwendet, um den axialen Gasstrom entlang der Welle zu verringern. Dieses ist besonders wichtig neben den Lagern, um zu verhindern, dass das Öl, das in den Lagern benutzt wird, durch die heissen Gase des Gasstroms überhitzt.

Traditionsgemäß werden in dieser Situation zwei Arten von Dichtungs-Technologien - meist alternativ, manchmal auch miteinander kombiniert - benutzt. Dies sind Labyrinthdichtungen und Bürstendichtungen.

Labyrinthdichtungen haben keinen Metall-Metall-Kontakt zwischen dem Rotor und dem Stator; daher ist ihr Dichtungseffekt verhältnismäßig klein. Jedoch bieten sie den Vorteil der niedrigen Rotationsreibung und der deswegen praktisch unbegrenzten Lebensdauer.

Bürstendichtungen andererseits haben höhere Reibungsverluste wegen der Reibung zwischen den Borstenenden und der Rotorwelle. Dies hat eine Abnutzung zur Folge, welche die Lebensdauer der Dichtung begrenzt. Die Bürstendichtungen bieten jedoch eine bessere Hemmung des axialen Gasstroms, besonders bei höheren axialen Druckdifferenzen.

Der Gebrauch dieser Technologien für das Abdichten in den Gasturbinen hat zahlreiche Einschränkungen. Erstens ist die axiale Druckdifferenz, der sie widerstehen können, noch ziemlich niedrig. Im Falle der Bürstendichtungen liegt dies an den Borsten, welche die gleiche Steifheit in axialer und in Umfangsrichtung haben: Hohe Drücke können die Borsten veranlassen, in axialer Richtung auf sich selbst zurückzublasen. Auch ist die Fähigkeit der Dichtungen, eine bedeutende Radialbewegung zuzulassen und ihr zu widerstehen, niedrig. Das Design einer Bürstendichtung ist häufig ein Kompromiss zwischen dem Verwenden einer Unterstützungsplatte, die genügend axiale Unterstützung geben soll, und dem Nicht-Einschränken der Radialbewegung.

Um die Nachteile der bekannten Bürstendichtungen zu vermeiden, ist in der US-B1-6,343,792 eine Lamellendichtung ("leaf seal") vorgeschlagen worden, welche die gleiche Funktion wie entweder eine Labyrinthdichtung oder eine Bürstendichtung ausübt, aber die Vorteile von beiden aufweist. Anstelle der Borsten, die aus Drähten mit kreisförmigem Querschnitt hergestellt werden, werde dünnen Metalllamellen oder -blätter in bestimmter Anordnung zusammengebaut (siehe z.B. die Fig. 3 der US-B1-6,343,792 oder die Fig. 1 der vorliegenden Anmeldung). Die Lamellen, die mit ihren Flächen im wesentlichen parallel zur axialen Richtung orientiert sind, sind in der axialen Richtung viel steifer als in Umfangsrichtung. So kann die Dichtung höheren Druckdifferenzen widerstehen, ohne dabei deren Möglichkeiten zum Zulassen von Radialbewegungen einzuschränken. Auch bietet der breite Bereich auf dem Rotor, der von den Spitzen der Lamellen überstrichen wird, die Gelegenheit, während des Betriebes eine hydrodynamische Kraft zu erzeugen, welche die Lamellenspitzen von der Welle trennen kann. Auf diese Weise kann ein Abstand von einigen Mikron erzeugt und beibehalten werden, so dass die Abnutzung, die Reibungshitze und die Reibungsverluste bis fast auf Null verringert werden.

Das grundlegende Design bezieht eine Anzahl von dünnen Metalllamellen ein, die zwischen sich einen kontrollierten Luftspalt aufweisen und in einem vorgegebenen Winkel zum Radius befestigt werden. Der Luftspalt ist ein kritischer Designparameter: Er ermöglicht das Auftreten eines Luftstroms, um damit den hydrodynamischen Effekt zu erzeugen; er darf aber nicht so groß sein, um einen übermässigen axialen Leckstrom zu erlauben.

Zwei Varianten des Lamellendichtungs-Designs sind möglich: Bei der einen Variante werden die Lamellen nach unten geblasen, bei der anderen dagegen aufwärts. Die Variante mit den nach unten geblasenen Lamellen schliesst ein, dass man einen Abstand zwischen den Lamellenspitzen und der Welle während dem Zusammenbau und dem Anfahren hat, und dass dieser Spalt durch den Einsatz eines Luftstroms zwischen den Lamellen auf sehr kleine Werte heruntergefahren wird. Andererseits schliesst die Variante mit dem Aufwärtsblasen ein, dass man während des Anfahrens eine geringfügige gegenseitige Beeinflussung zwischen den Lamellenspitzen und der Welle hat, und einen Abstand erzeugt, wenn die Welle beschleunigt. In beiden Fällen ist die Strömung des Mediums durch die Luftspalte zwischen den Lamellen kritisch, ebenso wie die Steuerung des inneren Durchmessers der Dichtung, der durch die Lamellenspitzen erzeugt wird.

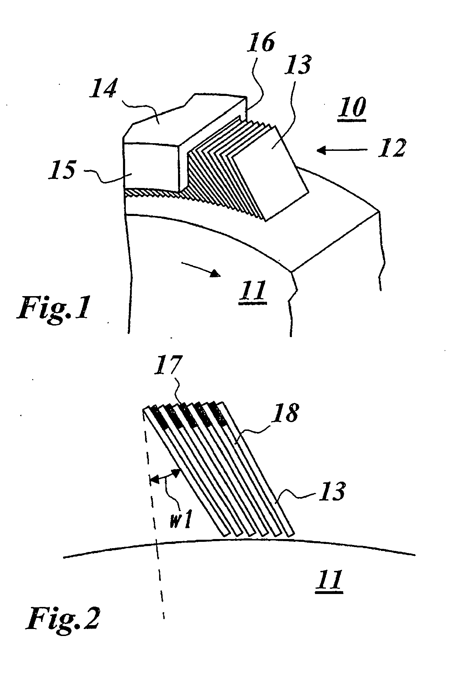

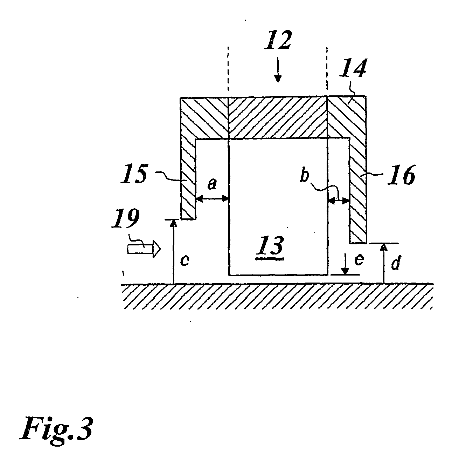

Der Luftstrom durch die Lamellen kann durch Verwendung einer vorderen und einer hinteren Platte verändert werden, die einen schmalen Spalt zwischen den Oberflächen des Lamellenpakets und den Platten frei lassen (siehe die o.g. Fig. 1 und 3). Ein sorgfältiges Design dieser Geometrien macht es möglich, die Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des Lamellendichtungskonzeptes ist eine grössere Toleranz der Radialbewegung als bei den Labyrinth- oder Bürstendichtungen. Dies erfordert dort einen grossen Abstand zwischen dem inneren Durchmesser der vorderen und rückseitigen Platten und der Welle.

Abhängig von der gewählten Geometrie für die Dichtung, und von dem Durchmesser der zu dichtenden Welle, kann die Anzahl der Lamellen einige Tausend oder zig Tausende betragen. Die Genauigkeit, mit der diese hergestellt, zusammengebaut und verbunden werden können, wobei ein reproduzierbarer Luftspalt zwischen jedem Paar von Lamellen sichergestellt wird, ist kritisch für die erfolgreiche Implementierung jedes möglichen Dichtungsdesigns.

Das Fügeverfahren zum Fixieren der Lamellen in ihrer Position könnte eine mechanische Technik, wie Festklemmen, Schweissen oder Hartlöten oder jede mögliche Kombination davon sein. Es ist dabei ganz offensichtlich wichtig, dass eine minimale Störung der Lamellen oder ihrer relativen Positionen während des Fügeprozesses auftritt.

Wichtig sind in diesem Zusammenhang insbesondere die zwischen den Lamellen platzierten Distanzelemente, welche die Breite des Luftspaltes präzise einstellen. Die Distanzelemente können als separate Elemente ausgebildet sein. Dies hat den Vorteil, dass die Lamellen als Elemente mit konstanter Dicke vergleichsweise einfach herzustellen sind. Dies hat aber auch den Nachteil, dass die Distanzelemente separat hergestellt werden müssen, und dass die alternierende Zusammenstellung der Lamellen und Distanzelemente zur Bildung eines Lamellenpakets aufwendig ist und leicht zu Positionierungsfehlern führen kann. Die Distanzelemente können aber auch als integrale Elemente der Lamellen ausgebildet sein, wodurch sich der Zusammenbau deutlich vereinfacht. Die Lamellen müssen dann allerdings einer speziellen Bearbeitung unterzogen werden, um die Bereiche unterschiedlicher Dicke herauszubilden.

In der o.g. US-B1-6,343,792 ist dazu bereits vorgeschlagen worden (siehe die dortige Fig. 27B und die zugehörige Beschreibung in Spalte 21, Zeilen 25-34), die abgestuften Dickenbereiche der Lamellen mit integralem Distanzelement mittels Ätzen herzustellen. Die Ätztechnik erlaubt eine präzise Einstellung der Dicken. Nachteilig ist dabei jedoch, dass mit dem Ätzen nach dem Zuschneiden der Lamellen ein zusätzlicher Prozessschritt eingeführt wird, der die Herstellung verkompliziert und in die Länge zieht.

Aus dem Dokument EP-A1-1 013 975 (siehe Absätze /0157/ und /0171-/0177/) ist bekannt, eine Vielzahl von Blättchen (18) durch Unterteilung einer Platte mittels einer Photoätzmethode herzustellen. Anschliessend werden zur Erzeugung spaltbildender Abstandselemente entweder Noppen (18a) geprägt (siehe Fig. 24), plattierte Schichten (41) aufgebracht (siehe Fig. 27A) oder zwei unterschiedlich dicke Flächenabschnitte X und Y der Blättchen (18) durch Ätzen der Blättchen (18) erzeugt, also erst nach dem ätztechnischen Vereinzeln der Blättchen (18).

Im Dokument WO 03/072287 A1 wird ein Verfahren zur Herstellung von medizinischen Implantaten (Stents zur Arterienerweiterung) beschrieben, bei welchen durch photolithographisches oder elektrochemisches Ätzen spezielle Mikrostrukturen, z.B. Mikronadeln erzeugt werden.

Das nicht vorveröffentlichte Dokument EP-A1-1 489 340 mit einer beanspruchten Priorität vom 20.06.2003 zeigt insbesondere in Fig. 4 und der dazugehörenden Beschreibung ein Verfahren zur Herstellung von Lamellendichtungen für Gasturbinen, bei welchem die Lamellen mit ihrer Randkontur aus einem Metallblech (M2) mittels eines Ätzprozesses herausgeschnitten und durch Ätzen der Spitzen (12) von einer Oberfläche des Bleches (M2) dessen Dicke verringert wird, so dass Bereiche (11, 12) mit unterschiedlicher Dicke erzeugt werden.

### DARSTELLUNG DER ERFINDUNG

Es ist Aufgabe der Erfindung, ein Verfahren zur Herstellung von Lamellen mit integralem Distanzelement für eine Lamellendichtung für rotierende Maschinen, insbesondere Gasturbinen, anzugeben, welches die Nachteile bekannter Verfahren vermeidet und insbesondere sich bei hoher Präzision durch einen vereinfachten Verfahrensablauf auszeichnet.

Die Aufgabe wird durch die Gesamtheit der Merkmale des Anspruchs 1 gelöst. Der Kern der Erfindung besteht darin, dass bei Lamellen, die ätztechnisch aus einem Metallblech herausgeschnitten werden, und bei denen innerhalb des dazu benötigten Ätzprozesses gleichzeitig auch die Bereiche unterschiedlicher Dicke erzeugt werden., die Lamellen so aus dem Metallblech ausgeschnitten werden, dass sie zur leichteren Handhabung und zum leichteren Transport mit dem übrigen Metallblech noch an vorbestimmten Verbindungspunkten leicht trennbar verbunden sind.

Zur besseren Kontrolle der Luftströmung innerhalb des Lamellenpakets und um das Lamellenpaket, herum ist vorzugsweise in den Lamellen jeweils wenigstens eine Durchgangsöffnung vorgesehen, die innerhalb des Ätzprozesses mittels Durchätzen des Metallblechs erzeugt wird.

Besonders einfach gestaltet sich die Herstellung im Hinblick auf die spätere Lamellendichtung, wenn die Lamellen jeweils ein integrales Distanzelement mit erhöhter Dicke zur Einstellung des Abstandes zwischen benachbarten Lamellen aufweisen, und wenn das integrale Distanzelement durch Abätzen der ausserhalb des Distanzelementes liegenden Flächen auf eine kleinere Dicke erzeugt wird, wobei vorzugsweise die Dicke im Bereich des Distanzelements im wesentlichen gleich der ursprünglichen Dicke des Metallblechs ist.

Als Ätzprozess wird vorzugsweise ein photochemisches Bearbeitungsverfahren (PCM) verwendet wird, bei welchem in einem ersten Schritt das Metallblech ein- oder beidseitig mit einer Photoresistschicht bedeckt wird, in einem zweiten Schritt die Photoresistschicht derart phototechnisch strukturiert wird, dass in vorbestimmten Bereichen, in denen das Metallblech durch Ätzen in seiner Dicke reduziert oder durchgeätzt werden soll, Durchbrechungen der Photoresistschicht erzeugt werden, und in einem dritten Schritt das Metallblech durch die Durchbrechungen in der Photoresistschicht hindurch abgeätzt bzw. durchgeätzt wird.

Dabei wird insbesondere zur phototechnischen Strukturierung der Photoresistschicht die Photoresistschicht durch eine Photomaske hindurch belichtet.

Das Verfahren lässt sich zeitlich abkürzen und vereinfachen, wenn zum Durchätzen des Metallblechs der Ätzprozess gleichzeitig von gegenüberliegenden Seiten des Metallblechs aus durchgeführt wird.

Eine weitere Variante des erfindungsgemässen Verfahrens führt dazu, dass die Lamellen jeweils zwei integrale Distanzelemente mit erhöhter Dicke zur Einstellung des Abstandes zwischen benachbarten Lamellen aufweisen, und dass die beiden integralen Distanzelemente seitlich nebeneinander angeordnet und durch einen ätztechnisch in der Dicke reduzierten ersten Faltbereich nach Art eines Filmscharniers verbunden sind, derart dass durch ein Falten im ersten Faltbereich die beiden integralen Distanzelemente deckungsgleich übereinander zu liegen kommen. Hierdurch ist es auf einfache Weise möglich, bei vergleichsweise geringen Ausgangsblechdicken auch grössere Distanzen zwischen benachbarten Lamellen herzustellen. Selbstverständlich können statt eines zusätzlichen Distanzelements auch mehrere zusätzliche Distanzelemente vorgesehen und durch Übereinanderfalten in den Lamellenstapel eingebunden werden.

In einer bevorzugten Weiterbildung dieser Variante sind mehrere Lamellen mit jeweils zwei integralen Distanzelementen nebeneinander angeordnet und jeweils durch einen zweiten Faltbereich miteinander verbunden. Sie bilden eine Reihe, derart, dass durch abwechselndes, zickzackförmiges Falten im ersten und zweiten Faltbereich die Lamellen und die integralen Distanzelemente annähernd deckungsgleich übereinander zu liegen kommen. Die zickzackförmig gefalteten, zusammenhängenden Lamellen vereinfachen die Stapelung und Zusammenstellung der einzelnen Lamellen zur fertigen Lamellendichtung.

Die erforderliche Schrägstellung der Lamellen im Stapel kann bei dieser Art der Faltung dadurch erreicht werden, dass die Lamellen und integralen Distanzelemente der Reihe jeweils in Längsrichtung der Lamellen leicht gegeneinander verschoben sind, derart dass sich beim Falten ein schräger Stapel von Lamellen und integralen Distanzelemente ergibt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht den typischen Aufbau einer Lamellendichtung, wie sie bei einer Gasturbine Anwendung findet;
- Fig. 2: in der Seitenansicht in Achsrichtung die aus der radialen Richtung geneigte Anordnung einzelner Lamellen mit ihren dazwischen liegenden Distanzelementen;
- Fig. 3: die Ansicht einer zu Fig. 1 vergleichbaren Lamellendichtung in Umfangsrichtung mit einer vorderen und hinteren Endplatte;
- Fig. 4: in einer schematisierten Schnittansicht verschiedene Schritte (a) bis (d) bei der photochemischen Herstellung einer Lamelle gemäss einem bevorzugten Ausführungsbeispiel der Erfindung;
- Fig. 5: in der Draufsicht von oben ein Metallblech, in dem eine Vielzahl von Lamellen mit integralem Distanzelement und Durchgangsöffnung mit einem photochemischen Verfahren gemäss der Erfindung vereinzelt, strukturiert und mit abgestuften Dickenbereichen versehen sind;
- Fig. 6: in einer zu Fig. 4 vergleichbaren Darstellung die Herstellung einer Bimetall-Lamelle innerhalb des photochemischen Verfahrens;
- Fig. 7: eine schematische Darstellung für die mit einer Bimetall-Lamelle erreichbare thermische Kontrolle des Dichtungsspiels;
- Fig. 8: in der Draufsicht von oben eine Lamelle nach der Erfindung mit einem seitlich angeformten zweiten Distanzelement, welches durch einen in der Dicke reduzierten Faltbereich mit dem ersten Distanzelement verbunden ist und über das erste Distanzelement gefaltet werden kann; und
- Fig. 9: in der Draufsicht von oben eine zusammenhängende Reihe von mehreren Lamellen und doppelten Distanzelementen, die durch in der Dicke reduzierte Faltbereiche miteinander verbunden sind und durch zickzackförmiges Falten zu einem schrägen Stapel übereinandergelegt werden können.

### WEGE ZUR AUSFÜHRUNG DER ERFINDUNG

In Fig. 1 ist in einer perspektivischen Seitenansicht der typische Aufbau einer Lamellendichtung dargestellt, wie sie bei einer Gasturbine Anwendung findet. Die Lamellendichtung 12 dichtet eine in Pfeilrichtung rotierende Rotorwelle 11 der Gasturbine 10 gegen ein Gehäuse 14. Im kreisringförmigen Zwischenraum zwischen der Rotorwelle 11 und dem Gehäuse 14 ist in einem Ring ein Paket von eng voneinander beabstandeten dünnen Lamellen 13 angeordnet. Die Lamellen 13 sind mit ihrer Fläche parallel zur Drehachse der Maschine orientiert. Die Lamellen sind gemäss Fig. 2 aus der radialen Richtung um einen Winkel w1 verkippt und haben zwischen sich jeweils einen schmalen Spalt bzw. Zwischenraum 18, der vorzugsweise durch zwischen den Lamellen 13 angeordnete Distanzelemente 17 festgelegt wird. Die Distanzelemente 17 der Fig. 2 sind als separate Elemente dargestellt. Sie können aber auch in die Lamellen integriert sein.

Gemäss Fig. 1 und 3 kann der Luftstrom durch die Lamellen 13 durch Verwendung einer vorderen und einer hinteren Endplatte 15 bzw. 16 verändert werden, die einen schmalen Spalt zwischen den Oberflächen des Lamellenpakets und den Endplatten 15, 16 frei lassen (Abstände a und b in Fig. 3). Ein sorgfältiges Design dieser Geometrien macht es möglich, die eingangs erwähnten Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des in Fig. 1 bzw. 3 dargestellten Lamellendichtungskonzeptes ist eine grössere Toleranz der Radialbewegung als bei den Labyrinth- oder Bürstendichtungen. Dies erfordert einen grossen Abstand zwischen dem inneren Durchmesser der vorderen und rückseitigen Endplatten 15, 16 und der Rotorwelle 11 (Abstände c und d in Fig. 3). Der Spalt zwischen den Lamellen 13 und der Rotorwelle (Abstand e in Fig. 3) beträgt nur wenige Mikron.

Für die Herstellung der einzelnen Lamellen der Lamellendichtung wird nun gemäss der Erfindung ein photochemischer Bearbeitungsprozess (Photo Chemical Manufacturing PCM) eingesetzt. In einer Entwicklungssituation mit kleinen Stückzahlen bietet PCM eine hohe Flexibilität hinsichtlich der Materialstärke, des Bauteildesigns und der Vorlaufzeit. Jedoch ist PCM auch eine Produktionstechnik für grosse Stückzahlen mit der Fähigkeit, viele Zehntausende identischer Komponenten schnell, präzise und zu einem angemessenen Preis zu produzieren.

Alternative Techniken für die Lamellenherstellung schließen das Stanzen aus einem dünnen Blech oder den Schnitt mit einem Laser oder ein Drahterosionsverfahren (Electro Discharge Wire EDM) oder andere Schnitttechniken mit ein.

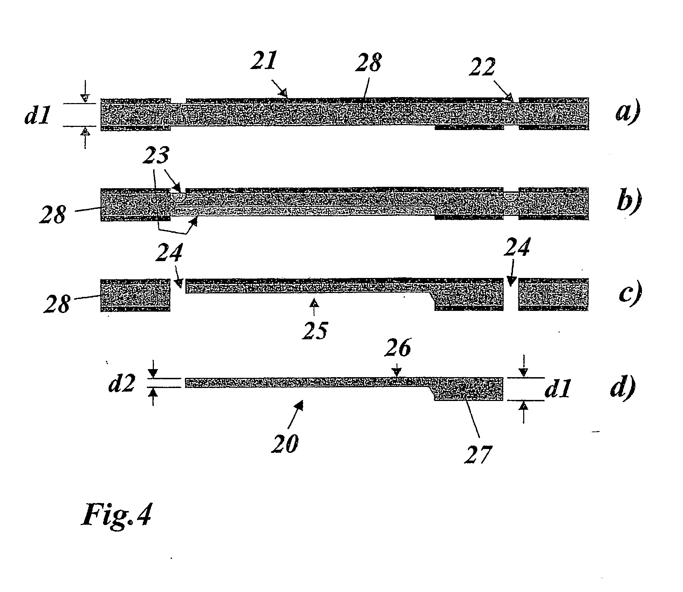

Ein Hauptvorteil des PCM gegenüber den oben genannten Verfahren ist das Vermögen, die Stärke des Metallblechs bzw. der Metallfolie gleichzeitig mit dem Schneiden des Randprofils selektiv zu verringern. Dies wird weiter unten im Zusammenhang mit Fig. 4 gezeigt.

In Fig. 4 sind schematisch von oben nach unten fortschreitend mehrere Schritte (a) bis (d) bei der Herstellung einer Lamelle gemäss einem bevorzugten Ausführungsbeispiel der Erfindung dargestellt. Ausgegangen wird von einem Metallblech bzw. einer Metallfolie 28 der Dicke d1. Das Metallblech 28 wird beidseitig mit einem Photoresistschicht 21 bedeckt. Der Photoresist ist beispielsweise ein Polymer, das durch Belichtung mit Licht aushärtet. Die beidseitige Photoresistschicht 21 wird durch eine Photomaske selektiv belichtet, wobei diejenigen Bereiche dem Licht ausgesetzt werden, in denen die Photoresistschicht erhalten bleiben soll. Die nicht belichteten übrigen Bereiche der Photoresistschichten 21 werden nach der Belichtung ausgewaschen, so dass in der Photoresistschicht 21 gemäss Fig. 4(a) in vorbestimmten Bereichen Durchbrechungen 22 erzeugt werden.

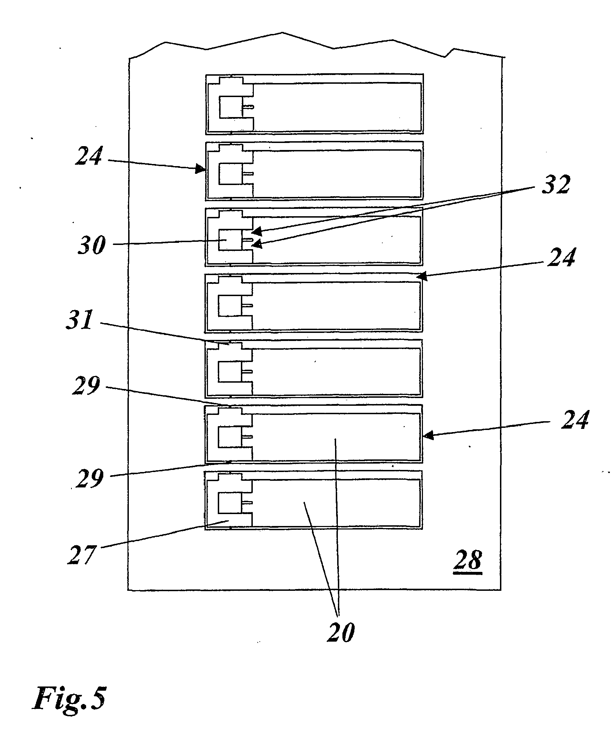

Das so vorbereitete Metallblech 28 wird nun in ein Ätzbad eingetaucht oder in eine Sprühkammer gebracht, wo es von beiden Seiten mit einer ätzenden Flüssigkeit besprüht wird. In den Bereichen, wo sich die Durchbrechungen 22 in der Photoresistschicht 21 befinden, entstehen nun gemäss Fig. 4(b) Ätzbereiche 23, in denen das Material des Metallblechs 28 sukzessive abgetragen wird. Die Hauptrichtung des Ätzprozesses ist von der Oberfläche des Metallblechs 28 nach innen gerichtet; es gibt jedoch auch eine gewisse seitliche Unterätzung, die beim Entwurf der Belichtungsmaske berücksichtigt werden muss. In gewissen Bereichen, insbesondere in dem ringförmigen Bereich, der zur Abtrennung der Lamelle 20 aus dem Metallblech 28 dient und die Randkontur der Lamelle 20 festlegt, erfolgt die Ätzung von beiden Seiten, trifft sich im Inneren des Metallblechs 28 und führt zu einer Durchätzung 24 (Fig. 4(c)). Die Durchätzung 24 "schneidet" die Lamelle 20 aus dem Metallblech 28. Sie schafft auch Durchgangsöffnungen (30 in Fig. 5) in den Lamellen 20, die zur Steuerung des Luftstroms in der späteren Dichtung verwendet werden. Gleichzeitig mit der Durchätzung erfolgt auch eine grossflächige Abätzung 25, d.h., eine gezielte Dickenreduktion von der Dicke d1 auf die Dicke d2, in einem vorgegebenen Bereich der späteren Lamelle (Fig. 4(c) und 4(d)). Durch Entfernen der Photoresistschichten 21 wird schliesslich die Lamellenoberfläche 26 wieder freigelegt (Fig. 4(d)).

Es werden so Lamellen 20 erhalten (Fig. 4(d)), die unterschiedliche Dicken d1 und d2 in vorbestimmten Bereichen haben. Mit einer geeigneten Auswahl der Dicken d1, d2 wird eine Lamelle 20 produziert, die ein integrales Distanzelement 27 aufweist. Dadurch ist es nicht mehr notwendig, abwechselnd Lamellen und Distanzelemente zusammenzubauen, um ein Lamellenpaket mit entsprechenden Luftspalten zu erzeugen.

Die Form der Photoresistschicht 21 auf der Oberfläche des Metallsblechs bzw. der Metallfolie 28 wird eindeutig nur durch die normalen Parameter des PCM-Prozesses begrenzt. So kann es möglich oder wünschenswert sein, wesentlich voneinander abweichende Ausgestaltungen auf entgegensetzenden Seiten des Streifens zu haben.

Das Beispiel, das in Fig. 4 schematisch gezeigt wird, veranschaulicht die Resultate des Ätzens mit gleicher Rate auf beiden Seiten der Lamelle, bis die Bereiche, in denen das Ätzen gleichzeitig stattfindet, vollständig durchgeätzt sind. Es kann jedoch mit einer vernünftigen Prozesssteuerung demonstriert werden, dass die Ätzrate ungleich gemacht werden kann, um so einen breiten Bereich an unterschiedlich geätzten Dicken innerhalb der ursprünglichen Dicken zu erhalten. Auch kann demonstriert werden, dass der PCM-Prozess bei einer Lamelle mehr als einmal angewendet werden kann, wobei jedes Mal ausgewählte andere Bereiche mit einer Photoresistschicht abgedeckt werden. So kann ein breiter Bereich von unterschiedlichen Dicke-Kombinationen innerhalb derselben Lamelle erzielt werden.

In Fig. 5 ist ein Beispiel von durch PCM hergestellten Lamellen gezeigt, die für Prototyp-Lamellendichtungen benutzt werden. Die Lamellen 20 haben ein integrales Distanzelement 27 der ursprünglichen Stärke des Materials, eine (rechteckige) Durchgangsöffnung 30 als Plenum für einen Luftdruckausgleich, und einen seitlichen Arm 31 für die Positionierung während des Zusammenbaus. Von der Durchgangsöffnung 30 gehen Führungskanäle 32 aus, welche die Richtung des Luftstromes an der Länge der Lamelle hinunter lenken. Das Funktionsteil der Lamelle, d.h. der grosse Bereich ausserhalb des integralen Distanzelements 27, ist auf eine verringerte Dicke heruntergeätzt worden. Die Lamellen 20 sind in Fig. 5 in einer Vielzahl gleichzeitig durch eine umlaufende, randseitige Durchätzung 24 aus dem ursprünglichen Metallblech 28 herausgetrennt.

Erfindungsgemäss werden die Lamellen 20 vom Metallblech 28 nach Vollendung des Prozesses nicht vollständig abgetrennt. Im Beispiel der Fig. 5 werden die Lamellen 20 noch an zwei gegenüberliegenden kleinen Verbindungspunkten 29 an ihrem Umkreis gehalten. Dies hilft, sicherzustellen, dass sie während des Transportes und der Behandlung flach bleiben, aber dennoch von dem Metallblech mit minimaler Kraft und Beschädigung weggebrochen werden können. Das Wegbrechen kann manuell oder in einem automatisierten Prozess durchgeführt werden.

Es ist auch zu leicht einzusehen, dass isolierte Bohrungen durch das PCM-Verfahren leicht produziert werden können, wobei der Abfall vollständig entfernt wird.

Im Beispiel der Fig. 5 ist jede Lamelle innerhalb der Toleranzen des PCM-Prozesses identisch. Jedoch liegt es im Bereich der Flexibilität des PCM, innerhalb derselben photographischen Maske einige unterschiedliche Gestaltungen der Lamellen 20 vorzusehen.

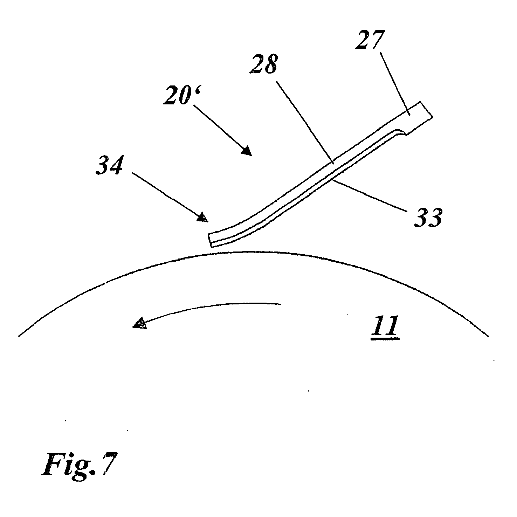

In einigen Anwendungsfällen mag es wünschenswert sein, Lamellen in der Lamellendichtung einzusetzen, die als Bimetall-Lamellen ausgebildet sind. Die Fehlanpassung der thermischen Ausdehnungskoeffizienten zwischen den beiden verwendeten Legierungen kann so massgeschneidert werden, dass die Lamellen eine kontrollierte Biegung während des Aufwärmens oder Abkühlens der Maschine ausführen (siehe Biegung 34 in Fig. 7). Darüber hinaus würde, wenn es während des Betriebes einen schleifenden Kontakt zwischen den Lamellen und der Rotorwelle gäbe, die entstehende Reibungshitze zu einer solchen Bimetall-Biegung führen. Dieser Effekt kann dahingehend optimiert werden, dass sich ein selbst-korrigierender Spalt zwischen den Spitzen der Lamellen und der Rotorwelle einstellt. Es kann aber auch wünschenswert sein, sicherzustellen, dass die bei der unteren der beiden Schichten verwendete Legierung eine Legierung mit den entsprechenden Abriebeigenschaften ist.

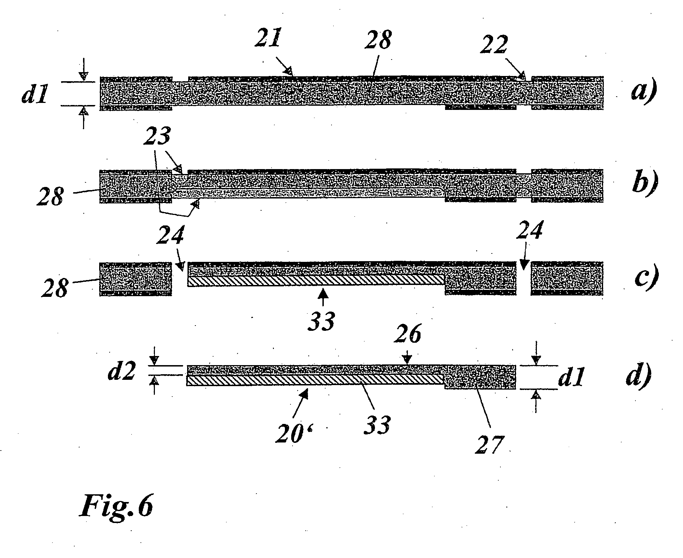

Wenn eine solche Bimetall-Lamelle wünschenswert sein sollte, kann sie - wie dies Fig. 6 zeigt - auf einfache Weise innerhalb des oben beschriebenen PCM-Verfahrens hergestellt werden: Nachdem gemäss Fig. 6a-c das Randprofil der Lamellen 20' geätzt und ihre Dicke in den nicht mit der Photoresistschicht 21 abgedeckten Bereichen selektiv reduziert ist, wird - solange die Maskierung noch vorhanden ist, durch ein Plattierungsverfahren oder einen anderen Auftragsprozess auf die freiliegende Fläche eine Beschichtung 33 mit einem metallischen Material aufgebracht, das einen deutlich höheren thermischen Ausdehnungskoeffizienten CTE (Coefficient of Thermal Expansion) aufweist, als das Basismaterial des Metallblechs 28. Durch die Maskierung mit der Photoresistschicht 21 wird die Beschichtung 33 nur auf der Unterseite der Lamelle 20' abgeschieden, ohne das integrale Distanzelement 27 und damit den späteren Prozesse des Zusammenfügens der Dichtung zu behindern. Das Plattierungsverfahren kann je nach den Anforderungen elektrolytisch, nichtelektrolytisch, diffusions-basiert oder sonst wie geartet sein. Nach dem Aufbringen der Beschichtung 33 kann die Photoresistschicht 21 in der üblichen Weise entfernt werden (Fig. 6d).

Wird eine solche Bimetall-Lamelle 20' bei geeignetem Einbau durch Reibung an der Rotorwelle 11 oder durch allgemeine Temperaturänderung erwärmt, ergibt sich durch den Bimetallaufbau mit den beiden Schichten 28 und 33 (Fig. 7) von der Lamellenspitze ausgehend eine Biegung 34, die zur automatischen Einstellung des Abstandes zwischen Lamellenspitze und Rotorwelle 11 eingesetzt werden kann.

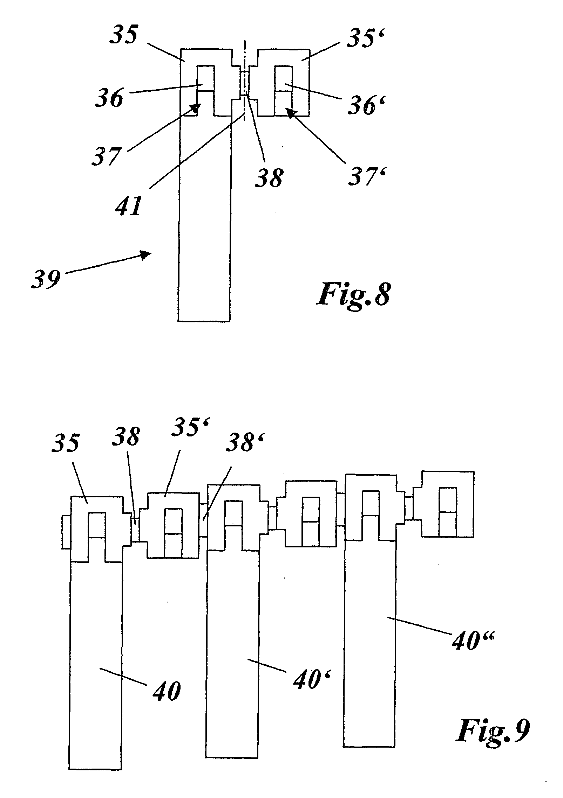

In den bisher erläuterten Ausführungsbeispielen wurde von einzelnen Lamellen ausgegangen, bei denen am einen Ende durch Beibehaltung der ursprünglichen Blechdicke in einem vorgegebenen Bereich ein integrales Distanzelement (z.B. 27 in Fig. 5) erzeugt wird. Bei einer vorgegebenen Ausgangsblechdicke lässt sich auf diese Weise nur ein beschränkter Bereich für das Dickenverhältnis von Distanzelement zu Lamelle verwirklichen. Um ein grösseres Dickenverhältnis erreichen zu können, kann gemäss Fig. 8 vorgegangen werden. Die Lamelle 39 aus Fig. 8 umfasst neben dem aus Fig. 5 bereits bekannten ersten integralen Distanzelement 35 mit der im Zentrum liegenden ersten Durchgangsöffnung 36 für das Plenum und dem ersten Führungskanal 37 für die Druckluft ein zweites integrales Distanzelement 35' mit einer zweiten Durchgangsöffnung 36' und einem zweiten Führungskanal 37'. Das zweite integrale Distanzelement 35', das seitlich neben dem ersten integralen Distanzelement 35 angeordnet ist, ist spiegelbildlich zu diesem ausgebildet und mit diesem über einen dazwischen liegenden Faltbereich 38 verbunden. Der Faltbereich 38 ist ein in der Dicke stark verringerter Blechabschnitt, der wie ein Filmscharnier wirkt und es ermöglicht, das zweite Distanzelement 35' entlang einer in Lamellenlängsrichtung verlaufenden Faltlinie 41 so über das erste Distanzelement 35 zu falten, dass beide deckungsgleich übereinander liegen. Hierdurch kann die Distanz zwischen zwei Lamellen bei gleichbleibender Blechdicke praktisch verdoppelt werden. Der dickenreduzierte Faltbereich 38 kann auf einfache Weise beim erfindungsgemässen Ätzverfahren gleichzeitig miterzeugt werden. Es versteht sich im übrigen von selbst, dass weitere, über Faltbereiche verbundene Distanzelemente an der rechten oder linken Seite vorgesehen werden können, um bei Bedarf noch grössere Abstände zwischen den Lamellen zu erzielen.

Eine bevorzugte Weiterbildung des in Fig. 8 dargestellten Ausführungsbeispiels ist in Fig. 9 wiedergegeben. Hier werden mehrere Lamellen 40, 40', 40" der in Fig. 8 gezeigten Art mit angeformtem zweiten Distanzelement aneinandergereiht und durch weitere Faltbereiche 38' untereinander verbunden. Die in der Reihe aufeinanderfolgenden Distanzelemente 35, 35' sind jeweils um eine gewisse Strecke in Lamellenlängsrichtung gegeneinander versetzt. Die Faltbereiche 38' haben dieselbe Ausgestaltung und Funktion wie die Faltbereiche 38, und sie werden auch auf dieselbe Weise erzeugt. Entlang der in den Faltbereichen 38, 38' verlaufenden Faltlinien 41 können die Lamellen und die dazwischenliegenden Distanzelemente 35' zickzackförmig zusammengefaltet werden. Durch den Längsversatz ergibt sich nach dem Zusammenfalten ein schräger Lamellenstapel, der die Montage der Lamellendichtung wesentlich vereinfacht. Durch diese Art der Herstellung und Faltung lässt sich ohne eine Nachbearbeitung - wie sie beispielsweise bei der Lösung der US-B2-6,553,639 nötig ist - auf besonders einfache Weise eine Lamellendichtung mit vergrössertem Abstand zwischen den Lamellen realisieren.

Insgesamt ergeben sich durch die Erfindung die folgenden Charakteristika und Vorteile:
- Lamellen mit einem integralen Distanzelement für die vereinfachte nachfolgende Herstellung, werden durch das Abätzen auf unterschiedliche Dicke produziert.
- Die Lamellendicke wird in vorbestimmten Bereichen gesteuert.
- Die stufenweise Dickenänderung für das integrale Distanzelement zur Erzeugung des gewünschten Luftspaltes zwischen den Lamellen nach deren Zusammenstellung und Verbindung wird gesteuert.
- Es besteht die Möglichkeit, unterschiedliche Metalldicken einer Lamelle durch eine oder mehrere Anwendung(en) des grundlegenden PCM Prozesses unterzubringen;
- Die Eigenschaften zur Steuerung des Luftstroms um das und innerhalb des Lamellenpakets können einbezogen werden, um die Erzeugung des hydrodynamischen Effektes an der Lamellenspitze zu unterstützen. Dies schließt eine Durchgangsbohrung am Kopf der Lamelle mit ein, die als ein Plenum dient, um die Druckzufuhr auszugleichen, und Führungskanäle, welche die Richtung des Luftstromes an der Länge der Lamelle hinunter lenken.
- Dünnere Abschnitte der Lamelle sind vorgesehen, um den Hauptteil der elastischen Biegespannung aufzunehmen. Dies verringert die gesamte Steifheit der Lamelle und erhöht die radiale Anpassung.
- Durch faltbare zusätzliche Distanzelemente können vergrösserte Abstände zwischen den Lamellen verwirklicht werden.
- Eine zickzackförmig faltbare Reihe von zusammenhängenden Lamellen und ggf. zusätzlichen Distanzelementen vereinfacht die Montage der Lamellendichtung.

### BEZUGSZEICHENLISTE

- 10: Gasturbine
- 11: Rotorwelle
- 12: Lamellendichtung
- 13,20,20': Lamelle
- 14: Gehäuse
- 15: Endplatte
- 17: Distanzelement (separat)
- 18: Spalt (Zwischenraum)
- 19: Gasstrom
- 21: Photoresistschicht
- 22: Durchbrechung
- 23: Ätzbereich
- 24: Durchätzung
- 25: Abätzung
- 26: Lamellenoberfläche
- 27: Distanzelement (integral)
- 28: Metallblech (Metallfolie)
- 29: Verbindungspunkt
- 30: Durchgangsöffnung
- 31: seitlicher Arm
- 32: Führungskanal
- 33: Beschichtung (mit hohem CTE)
- 34: Biegung (thermisch verursacht)
- 35,35': Distanzelement (integral)
- 36,36': Durchgangsöffnung
- 37,37': Führungskanal
- 38,38': Faltbereich (Filmscharnier)
- 39: Lamelle
- 40,40',40": Lamelle
- 41: Faltlinie
- d1 ,d2: Dicke

## Patentansprüche

1. Verfahren zum Herstellen von Lamellen (20, 20', 39; 40, 40', 40") für eine Lamellendichtung (12) als Dichtung für eine Gasturbine (10), welche Lamellen (20, 20', 39; 40, 40', 40") seitlich durch eine umlaufende Randkontur begrenzt sind und Bereiche unterschiedlicher Dicke (d1, d2) aufweisen, wobei die Lamellen (20, 20', 39; 40, 40', 40") mit ihrer Randkontur aus einem Metallblech (28) mittels eines Ätzprozesses herausgeschnitten werden, und innerhalb des Ätzprozesses auch die Bereiche unterschiedlicher Dicke (d1, d2) erzeugt werden und wobei zum Ausschneiden der Lamellen (20, 20', 39; 40, 40', 40") das Metallblech (28) jeweils in einem der Randkontur entsprechenden Bereich durchgeätzt wird, **dadurch gekennzeichnet, dass** die Lamellen (20, 20', 39; 40, 40', 40") so aus dem Metallblech (28) ausgeschnitten werden, dass sie zur leichteren Handhabung und zum leichteren Transport mit dem übrigen Metallblech noch an vorbestimmten Verbindungspunkten (29) leicht trennbar verbunden sind.

2. Verfahren nach Anspruch 1, **dadurch gekennzeichnet, dass** in den Lamellen (20, 20', 39; 40, 40', 40") jeweils wenigstens eine Durchgangsöffnung (30, 36, 36') vorgesehen ist, und dass die wenigstens eine Durchgangsöffnung (30, 36, 36') innerhalb des Ätzprozesses mittels Durchätzen des Metallblechs (28) erzeugt wird.

3. Verfahren nach einem der Ansprüche 1 bis 2, **dadurch gekennzeichnet, dass** die Lamellen (20, 20', 39; 40, 40', 40") jeweils wenigstens ein integrales Distanzelement (17; 35, 35') mit erhöhter Dicke (d1) zur Einstellung des Abstandes zwischen benachbarten Lamellen aufweisen, und dass das wenigstens eine integrale Distanzelement (17; 35, 35') durch Abätzen der ausserhalb des Distanzelementes (17; 35, 35') liegenden Flächen auf eine kleinere Dicke (d2) erzeugt wird.

4. Verfahren nach Anspruch 3, **dadurch gekennzeichnet, dass** die Dicke (d1) im Bereich des Distanzelements (17; 35, 35') im wesentlichen gleich der ursprünglichen Dicke des Metallblechs (28) ist.

5. Verfahren nach einem der Ansprüche 1 bis 4, **dadurch gekennzeichnet, dass** als Ätzprozess ein photochemisches Bearbeitungsverfahren (PCM) verwendet wird, bei welchem in einem ersten Schritt das Metallblech (28) ein- oder beidseitig mit einer Photoresistschicht (21) bedeckt wird, dass in einem zweiten Schritt die Photoresistschicht derart phototechnisch strukturiert wird, dass in vorbestimmten Bereichen, in denen das Metallblech (28) durch Ätzen in seiner Dicke reduziert oder durchgeätzt werden soll, Durchbrechungen (22) der Photoresistschicht (21) erzeugt werden, und dass in einem dritten Schritt das Metallblech (28) durch die Durchbrechungen (22) in der Photoresistschicht (21) hindurch abgeätzt bzw. durchgeätzt wird.

6. Verfahren nach Anspruch 5, **dadurch gekennzeichnet, dass** zur phototechnischen Strukturierung der Photoresistschicht (21) die Photoresistschicht (21) durch eine Photomaske hindurch belichtet wird.

7. Verfahren nach Anspruch 5 oder 6, **dadurch gekennzeichnet, dass** zum Durchätzen des Metallblechs (28) der Ätzprozess gleichzeitig von gegenüberliegenden Seiten des Metallblechs (28) aus durchgeführt wird.

8. Verfahren nach einem der Ansprüche 5 bis 7, **dadurch gekennzeichnet, dass** in einem vierten Schritt die Fläche, welche zur Reduktion der Dicke durch die Durchbrechungen (22) in der Photoresistschicht (21) hindurch abgeätzt worden ist, mit einer Beschichtung (33) versehen wird, welche einen deutlich höheren thermischen Ausdehnungskoeffizienten (CTE) aufweist, als das Metall des Metallblechs (28).

9. Verfahren nach Anspruch 8, **dadurch gekennzeichnet, dass** die Beschichtung (33) durch die Durchbrechungen (22) in der Photoresistschicht (21) hindurch aufgebracht wird.

10. Verfahren nach Anspruch 8 oder 9, **dadurch gekennzeichnet, dass** die Beschichtung (33) mittels eines Plattierungsprozesses aufgebracht wird.

11. Verfahren nach Anspruch 3, **dadurch gekennzeichnet, dass** die Lamellen (39; 40, 40', 40") jeweils zwei integrale Distanzelemente (35, 35') mit erhöhter Dicke (d1) zur Einstellung des Abstandes zwischen benachbarten Lamellen aufweisen, und dass die beiden integralen Distanzelemente (35, 35') seitlich nebeneinander angeordnet und durch einen ätztechnisch in der Dicke reduzierten ersten Faltbereich (38) nach Art eines Filmscharniers verbunden sind, derart dass durch ein Falten im ersten Faltbereich (38) die beiden integralen Distanzelemente (35, 35') deckungsgleich übereinander zu liegen kommen.

12. Verfahren nach Anspruch 11, **dadurch gekennzeichnet, dass** mehrere Lamellen (40, 40', 40") mit jeweils zwei integralen Distanzelementen (35, 35') nebeneinander angeordnet und jeweils durch einen zweiten Faltbereich (38') miteinander verbunden sind und eine Reihe bilden, derart, dass durch abwechselndes, zickzackförmiges Falten im ersten und zweiten Faltbereich (38, 38'), die Lamellen (40, 40', 40") und die integralen Distanzelemente (35, 35') annähernd deckungsgleich übereinander zu liegen kommen.

13. Verfahren nach Anspruch 12, **dadurch gekennzeichnet, dass** die Lamellen (40, 40', 40") und integralen Distanzelemente (35, 35') der Reihe jeweils in Längsrichtung der Lamellen (40, 40', 40") leicht gegeneinander verschoben sind, derart dass sich beim Falten ein schräger Stapel von Lamellen (40, 40', 40") und integralen Distanzelemente (35, 35') ergibt.

## Claims

1. Process for producing leaves (20, 20', 39; 40, 40', 40") for a leaf seal (12), as a seal for a gas turbine (10), which leaves (20, 20', 39; 40, 40', 40") are laterally delimited by a peripheral edge contour and have regions of different thicknesses (d1, d2), wherein the edge contour of the leaves (20, 20', 39; 40, 40', 40") is cut out of a metal sheet (28) by means of an etching process, and the regions of different thicknesses (d1, d2) are also produced as part of the etching process and wherein to cut out the leaves (20, 20', 39; 40, 40', 40") the metal sheet (28) is in each case etched through in a region corresponding to the edge contour, **characterized in that** the leaves (20, 20', 39; 40, 40', 40") are cut out of the metal sheet (28) in such a way that, for easier handling and easier transportation, they remain connected, in a readily detectable manner, to the remaining metal sheet at predetermined connecting points (29).

2. Process according to Claim 1, **characterized in that** there is at least one passage opening (30, 36, 36') in each of the leaves (20, 20', 39; 40, 40', 40"), and **in that** the at least one passage opening (30, 36, 36') is produced by etching through the metal sheet (28) as part of the etching process.

3. Process according to one of Claims 1 to 2, **characterized in that** the leaves (20, 20', 39; 40, 40', 40") each have at least one integral spacer element (17; 35, 35') of increased thickness (d1) in order to set the distance between adjacent leaves, and **in that** the at least one integral spacer element (17; 35, 35') is produced by etching away the areas located outside the spacer element (17; 35, 35') to a reduced thickness (d2).

4. Process according to Claim 3, **characterized in that** the thickness (d1) in the region of the spacer element (17; 35, 35') is substantially equal to the original thickness of the metal sheet (28).

5. Process according to one of Claims 1 to 4, **characterized in that** the etching process used is a photochemical machining (PCM) process, in which in a first step the metal sheet (28) is covered on one or both sides with a photoresist layer (21), **in that** in a second step the photoresist layer is photographically patterned in such a manner that the photoresist layer (21) is selectively removed in predetermined regions (22) in which the metal sheet (28) is to have its thickness reduced by etching or is to be etched through, and **in that** in a third step the metal sheet (28) is selectively etched away or etched through in the regions where the photoresist layer (21) has been removed.

6. Process according to Claim 5, **characterized in that** for the photographic patterning of the photoresist layer (21), the photoresist layer (21) is exposed through a photomask.

7. Process according to Claim 5 or 6, **characterized in that** to etch through the metal sheet (28), the etching process is carried out simultaneously from opposite sides of the metal sheet (28).

8. Process according to one of Claims 5 to 7, **characterized in that** in a fourth step the area which has been etched away in order to reduce the thickness in the regions (22) where photoresist layer (21) has been selectively removed is provided with a coating (33) which has a significantly different coefficient of thermal expansion (CTE) than the metal of the metal sheet (28).

9. Process according to Claim 8, **characterized in that** the coating (33) is applied in the regions (22) where the photoresist layer (21) has been selectively removed.

10. Process according to Claim 8 or 9, **characterized in that** the coating (33) is applied by means of a plating process.

11. Process according to Claim 3, **characterized in that** the leaves (39; 40, 40', 40'') have in each case two integral spacer elements (35, 35') of increased thickness (d1) for setting the spacing between adjacent leaves, and **in that** the two integral spacer elements (35, 35') are arranged laterally next to one another and are connected by a first folding region (38), the thickness of which is reduced by etching technology, in the manner of a film hinge, in such a way that the two integral spacer elements (35, 35') come to lie congruently over one another by way of a fold in the first folding region (38).

12. Process according to Claim 11, **characterized in that** a plurality of leaves (40, 40', 40'') having in each case two integral spacer elements (35, 35') are arranged next to one another and are connected to one another in each case by a second folding region (38') and form a row in such a way that the leaves (40, 40', 40'') and the integral spacer elements (35, 35') come to lie approximately congruently over one another by way of alternate, zigzag-shaped folding in the first and second folding regions (38, 38').

13. Process according to Claim 12, **characterized in that** the leaves (40, 40', 40'') and integral spacer elements (35, 35') of the row are displaced slightly with respect to one another in each case in the longitudinal direction of the leaves (40, 40', 40''), in such a way that an oblique stack of leaves (40, 40', 40'') and integral spacer elements (35, 35') results during folding.

## Revendications

1. Procédé de fabrication de lamelles (20, 20', 39 ; 40, 40', 40") pour un joint d'étanchéité à lamelles (12) en tant que joint d'étanchéité pour une turbine à gaz (10), lesquelles lamelles (20, 20', 39 ; 40, 40', 40") sont limitées latéralement par un contour de bord périphérique et présentent des régions d'épaisseurs différentes (d1, d2), les lamelles (20, 20', 39 ; 40, 40', 40") étant découpées avec leur contour de bord dans une tôle métallique (28) au moyen d'un processus de gravage, et les régions d'épaisseurs différentes (d1, d2) étant également produites pendant le processus de gravage et pour le découpage des lamelles (20, 20', 39 ; 40, 40', 40"), la tôle métallique (28) étant découpée par gravage à chaque fois dans une région correspondant au contour de bord, **caractérisé en ce que** les lamelles (20, 20', 39 ; 40, 40', 40") sont découpées dans la tôle métallique (28), de telle sorte qu'elles soient encore connectées de manière facilement séparable pour la manipulation plus facile et pour le transport plus facile au reste de la tôle métallique en des points de connexion prédéterminés (29).

2. Procédé selon la revendication 1, **caractérisé en ce qu'**à chaque fois au moins une ouverture de passage (30, 36, 36') est prévue dans les lamelles (20, 20', 39 ; 40, 40', 40") et **en ce que** l'au moins une ouverture de passage (30, 36, 36') est produite pendant le processus de gravage au moyen d'un découpage par gravage de la tôle métallique (28).

3. Procédé selon l'une quelconque des revendications 1 à 2, **caractérisé en ce que** les lamelles (20, 20', 39 ; 40, 40', 40") présentent à chaque fois au moins un élément d'espacement intégral (17 ; 35, 35') d'épaisseur accrue (d1) pour l'ajustement de la distance entre des lamelles adjacentes et **en ce que** l'au moins un élément d'espacement intégral (17 ; 35, 35') est produit par enlèvement par gravage des surfaces situées à l'extérieur de l'élément d'espacement (17 ; 35, 35') jusqu'à une moindre épaisseur (d2).

4. Procédé selon la revendication 3, **caractérisé en ce que** l'épaisseur (d1) dans la région de l'élément d'espacement (17 ; 35, 35') est essentiellement identique à l'épaisseur d'origine de la tôle métallique (28).

5. Procédé selon l'une quelconque des revendications 1 à 4, **caractérisé en ce que** l'on utilise en tant que processus de gravage un procédé de traitement photochimique (PCM) dans lequel, dans une première étape, la tôle métallique (28) est recouverte d'un côté ou des deux côtés avec une couche de résine photosensible (21), **en ce que**, dans une deuxième étape, la couche de résine photosensible est structurée par voie phototechnique de telle sorte que dans des régions prédéterminées, dans lesquelles la tôle métallique (28) doit être découpée par gravage ou son épaisseur doit être réduite par gravage, des interruptions (22) de la couche de résine photosensible (21) soient produites, et **en ce que** dans une troisième étape, la tôle métallique (28) est enlevée ou découpée par gravage à travers les interruptions (22) dans la couche de résine photosensible (21).

6. Procédé selon la revendication 5, **caractérisé en ce que** pour la structuration phototechnique de la couche de résine photosensible (21), la couche de résine photosensible (21) est éclairée à travers un photomasque.

7. Procédé selon la revendication 5 ou 6, **caractérisé en ce que** pour le découpage par gravage de la tôle métallique (28), le processus de gravage est mis en oeuvre simultanément depuis des côtés opposés de la tôle métallique (28).

8. Procédé selon l'une quelconque des revendications 5 à 7, **caractérisé en ce que** dans une quatrième étape, la surface qui, pour la réduction de l'épaisseur, a été enlevée par gravage à travers les interruptions (22) dans la couche de résine photosensible (21) est pourvue d'un revêtement (33) qui présente un coefficient de dilatation thermique nettement plus élevé (CTE) que le métal de la tôle métallique (28).

9. Procédé selon la revendication 8, **caractérisé en ce que** le revêtement (33) est appliqué à travers les interruptions (22) dans la couche de résine photosensible (21).

10. Procédé selon la revendication 8 ou 9, **caractérisé en ce que** le revêtement (33) est appliqué au moyen d'un processus de placage.

11. Procédé selon la revendication 3, **caractérisé en ce que** les lamelles (39 ; 40, 40', 40") présentent à chaque fois deux éléments d'espacement intégraux (35, 35') d'épaisseur accrue (d1) pour l'ajustement de la distance entre des lamelles adjacentes, et **en ce que** les deux éléments d'espacement intégraux (35, 35') sont disposés latéralement l'un à côté de l'autre et sont connectés à la manière d'une charnière à film par une première région de pli (38) d'épaisseur réduite par une technique de gravage, de telle sorte que par un pliage dans la première région de pli (38), les deux éléments d'espacement intégraux (35, 35') viennent se placer en coïncidence l'un au-dessus de l'autre.

12. Procédé selon la revendication 11, **caractérisé en ce que** plusieurs lamelles (40, 40', 40'') avec à chaque fois deux éléments d'espacement intégraux (35, 35') sont disposées les unes à côté des autres, et sont connectées les unes aux autres à chaque fois par une deuxième région de pli (38') et forment une rangée de telle sorte que par un pliage alternant en zigzag dans la première et la deuxième région de pli (38, 38'), les lamelles (40, 40', 40'') et les éléments d'espacement intégraux (35, 35') viennent s'appliquer les uns sur les autres approximativement en coïncidence.

13. Procédé selon la revendication 12, **caractérisé en ce que** les lamelles (40, 40', 40'') et les éléments d'espacement intégraux (35, 35') de la rangée sont à chaque fois légèrement déplacés les uns par rapport aux autres dans la direction longitudinale des lamelles (40, 40', 40'') de telle sorte que lors du pliage, une pile oblique de lamelles (40, 40', 40'') et d'éléments d'espacement intégraux (35, 35') soit obtenue.
